# EUROPEAN PATENT SPECIFICATION

(11) **EP 4 399 241 B1**
(45) Date of publication and mention of the grant of the patent: **05.11.2025**
(21) Application number: 22773318.5
(22) Date of filing: 06.09.2022
(51) Int. Cl.: C08L 9/00, B60C 1/00, C08K 5/00

(54) **TYRE FOR VEHICLE WHEELS**
LUFTREIFEN FÜR FAHRZEUGRÄDER
PNEUMATIQUE POUR VÉHICULES À ROUES

(30) Priority: 08.09.2021 IT 202100023213
(43) Date of publication of application: 17.07.2024
(73) Proprietor: Pirelli Tyre S.p.A., 20126 Milano (IT)
(72) Inventor: ROMANI, Francesco, 20126 Milano (IT); WAGEMANN, Juergen, 20126 Milano (IT); LOSTRITTO, Angela, 20126 Milano (IT)
(74) Representative: PGA S.p.A.
(86) International application number: PCT/IB2022/058367
(87) International publication number: WO 2023/037239

(56) References cited:
- EP-A1- 2 149 588
- EP-A1- 3 034 388
- WO-A1-2016/061300
- US-A1- 2003 111 770

## Description

### FIELD OF THE INVENTION

The present invention relates to improved winter tyres which have excellent grip and braking performance in all conditions of use, and at the same time excellent wear resistance performance, ensuring a longer life span of the tyre.

### PRIOR ART

In the tyre industry, research pursues the goal of increasing driving safety along with increasing overall performance. At the same time, the end user of the tyre wants the life of the tyre to be as long as possible, while maintaining optimum performance throughout the life of the tyre.

In the field of winter tyres, tread compounds are widely used which comprise a mixture of elastomers, in particular styrene-butadiene copolymers (SBR), isoprene polymers (IR), and possibly butadiene polymers (BR) with a high content of reinforcing agents, in particular of silica, and of resins and/or plasticising oils and/or liquid polymers.

International patent application publications number WO2020243308A1, WO2019131389A1, WO2019131395A1, WO2019131397A1, WO2019131405A1, WO2017046771 A1, WO2014067826A1, WO2010009850A1 describe tread compounds for winter tyres with the above features.

The tread compounds made according to the teachings of the prior art claim good grip and braking features in the typical conditions of use of a winter tyre (ice and snow), but also in wet and dry conditions.

### SUMMARY OF THE INVENTION

The Applicant has observed that the tread compounds for winter tyres known in the art have a relatively low wear resistance, which consequently entails a relatively high wear of the tread, in particular in conditions of driving on dry roads and at temperatures above 5°-10°C.

The Applicant has therefore faced the problem of improving the wear resistance of the tread compounds for winter tyres while maintaining good grip features in all conditions.

The Applicant thought that the low wear resistance could be due to the presence of a mixture of various elastomers (SBR, IR, BR) and/or to the high quantity of reinforcing fillers and/or to the presence of plasticisers, which could cause a bad distribution of the vulcanisation package within the compound and consequently a non-uniformity of the vulcanised compound.

Starting from this hypothesis, the Applicant has started an experimentation to understand how they could improve the uniformity of the vulcanised compound.

The Applicant first thought of using an elastomeric compound comprising a single elastomer in order to avoid the difficulties of mixing two or more elastomers, in which the other components, and in particular the vulcanisation package, have different solubility, thus causing a non-uniform distribution of the cross-linking density. However, the results of this experiment were not encouraging.

The Applicant has therefore thought of improving the distribution of the vulcanisation package, in particular by using components capable of solubilising better and more uniformly in the elastomeric compound.

After extensive experimentation, the Applicant has surprisingly found that the use of a particular organic salt of zinc was able to improve wear resistance while maintaining the grip and holding performance substantially unchanged in all driving conditions when used with compounds comprising two or more elastomers.

Furthermore, and quite unexpectedly, the Applicant also observed that the use of the above organic salt of zinc with an elastomeric compound comprising a single elastomer, in particular styrene-butadiene rubber, was not only able to improve wear resistance, but also to provide greater grip on snow and reduced rolling resistance, with a consequent reduction in fuel consumption and environmental impact.

The present invention therefore relates to a tyre for vehicle wheels comprising:
- a carcass structure, having opposite side edges associated with respective bead structures;
- optionally, a belt structure applied in a radially external position with respect to said carcass structure;
- a tread band applied in a radially external position with respect to said carcass and/or belt structure;

characterized in that said tread band comprises a vulcanised elastomeric compound obtained by vulcanisation of a vulcanisable elastomeric compound made by mixing an elastomeric composition, wherein said elastomeric composition comprises
   (i) 100 phr of an elastomeric polymer composition comprising, preferably consisting of:
      a. at least one styrene-butadiene polymer (SBR) in an amount of from 70 to 100 phr, and
      b. optionally, from 0 to 30 phr of at least one elastomeric polymer selected from the group consisting of isoprene polymer (IR) and butadiene polymer (BR),
   (ii) from 50 to 100 phr of a mixture of resins and/or plasticising oils,
   (iii) at least one reinforcing filler in an amount of from 50 to 130 phr,
   (iv) at least one vulcanising agent in an amount of from 0.1 to 12 phr, and
   (v) from 0.1 to 5 phr of an organic salt of zinc having the following structural formula 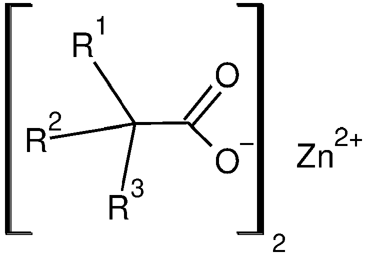
wherein the groups R¹, R² and R³, equal or different from each other, are a hydrogen atom or a linear or branched alkyl chain comprising from 1 to 10 carbon atoms, preferably from 1 to 8 carbon atoms, and wherein the groups R¹, R² and R³ comprise a total of from 8 to 10 carbon atoms.

In a second aspect thereof, the present invention also relates to a vulcanisable elastomeric compound obtained by mixing an elastomeric composition, wherein said elastomeric composition comprises
(i) 100 phr of an elastomeric polymer composition comprising, preferably consisting of:
   a. at least one styrene-butadiene polymer (SBR) in an amount of from 70 to 100 phr, and
   b. optionally, from 0 to 30 phr of at least one elastomeric polymer selected from the group consisting of isoprene polymer (IR) and butadiene polymer (BR),
(ii) from 50 to 100 phr of a mixture of resins and/or plasticising oils,
(iii) at least one reinforcing filler in an amount of from 50 to 130 phr,
(iv) at least one vulcanising agent in an amount of from 0.1 to 12 phr, and
(v) from 0.1 to 5 phr of an organic salt of zinc having the following structural formula 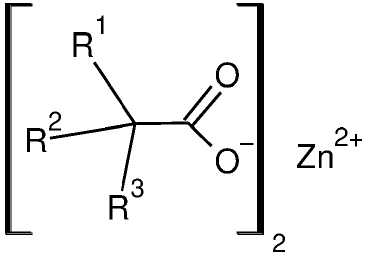 wherein the groups R¹, R² and R³, equal or different from each other, are a hydrogen atom or a linear or branched alkyl chain comprising from 1 to 10 carbon atoms, preferably from 1 to 8 carbon atoms, and wherein the groups R¹, R² and R³ comprise a total of from 8 to 10 carbon atoms.

### DEFINITIONS

The term "elastomeric composition" means a composition comprising at least one diene elastomeric polymer and one or more additives, which by mixing and possible heating provides an elastomeric compound suitable for use in tyres and components thereof.

The components of the elastomeric composition are not generally introduced simultaneously into the mixer but typically added in sequence. In particular, the vulcanisation additives, such as the vulcanization agent and possibly the accelerant and retardant agents, are usually added in a downstream step with respect to the incorporation and processing of all the other components.

In the final vulcanisable elastomeric compound, the individual components of the elastomeric composition may be altered or no longer individually traceable as modified, completely or in part, due to the interaction with the other components, of heat and/or mechanical processing. The term "elastomeric composition" herein is meant to include the set of all the components that are used in the preparation of the elastomeric compound, regardless of whether they are actually present simultaneously, are introduced sequentially or are then traceable in the elastomeric compound or in the final tyre.

The term "elastomeric polymer" indicates a natural or synthetic polymer which, after vulcanisation, may be stretched repeatedly at room temperature to at least twice its original length and after removal of the tensile load substantially immediately returns with force to approximately its original length (according to the definitions of the ASTM D1566-11 Standard terminology relating to Rubber).

The term "diene polymer" indicates a polymer or copolymer derived from the polymerisation of one or more different monomers, among which at least one of them is a conjugated diene (conjugated diolefin).

The term "elastomeric compound" indicates the compound obtainable by mixing and possibly heating at least one elastomeric polymer with at least one of the additives commonly used in the preparation of tyre compounds.

The term "vulcanisable elastomeric compound" indicates the elastomeric compound ready for vulcanisation, obtainable by incorporation into an elastomeric compound of all the additives, including those of vulcanisation.

The term "vulcanised elastomeric compound" means the material obtainable by vulcanisation of a vulcanisable elastomeric compound.

The term "green" indicates a material, a compound, a composition, a component or a tyre not yet vulcanised.

The term "vulcanisation" refers to the cross-linking reaction in a natural or synthetic rubber induced by a typically sulphur-based cross-linking agent.

The term "vulcanization agent" indicates a product capable of transforming natural or synthetic rubber into elastic and resistant material by virtue of the formation of a three-dimensional network of inter- and intra-molecular bonds. Typical vulcanisation agents are sulphur-based compounds such as elemental sulphur, polymeric sulphur, sulphur-donor agents such as bis[(trialkoxysilyl)propyl]polysulphides, thiurams, dithiodimorpholines and caprolactam-disulphide.

The term "vulcanisation accelerant" means a compound capable of decreasing the duration of the vulcanisation process and/or the operating temperature, such as sulphenamides, thiazoles, dithiophosphates, dithiocarbamates, guanidines, as well as sulphur donors such as thiurams.

The term "vulcanisation activating agent" indicates a product capable of further facilitating the vulcanisation, making it happen in shorter times and possibly at lower temperatures. An example of activating agent is the stearic acid-zinc oxide system.

The term "vulcanisation retardant" means a product capable of delaying the onset of the vulcanisation reaction and/or suppressing undesired secondary reactions, for example N-(cyclohexylthio)phthalimide (CTP).

The term "vulcanisation package" is meant to indicate the vulcanisation agent and one or more vulcanisation additives selected from among vulcanisation activating agents, accelerants and retardants.

The term "reinforcing filler" is meant to refer to a reinforcing material typically used in the sector to improve the mechanical properties of tyre rubbers, preferably selected from among carbon black, conventional silica, such as silica from sand precipitated with strong acids, preferably amorphous, diatomaceous earth, calcium carbonate, titanium dioxide, talc, alumina, aluminosilicates, kaolin, silicate fibres and mixtures thereof.

The term "white filler" is meant to refer to a conventional reinforcing material used in the sector selected from among conventional silica and silicates, such as sepiolite, paligorskite also known as attapulgite, montmorillonite, alloisite and the like, possibly modified by acid treatment and/or derivatised. Typically, white fillers have surface hydroxyl groups.

The term "mixing step (1)" indicates the step of the preparation process of the elastomeric compound in which one or more additives may be incorporated by mixing and possibly heating, except for the vulcanization agent which is fed in step (2). The mixing step (1) is also referred to as "non-productive step". In the preparation of a compound there may be several "non-productive" mixing steps which may be indicated with 1a, 1b, etc.

The term "mixing step (2)" indicates the next step of the preparation process of the elastomeric compound in which the vulcanization agent and, possibly, the other additives of the vulcanisation package are introduced into the elastomeric compound obtained from step (1), and mixed in the material, at controlled temperature, generally at a compound temperature lower than 120°C, so as to provide the vulcanisable elastomeric compound. The mixing step (2) is also referred to as "productive step".

For the purposes of the present description and the following claims, the term "phr" (acronym for parts per hundreds of rubber) indicates the parts by weight of a given elastomeric compound component per 100 parts by weight of the elastomeric polymer, considered net of any extension oils.

Unless otherwise indicated, all the percentages are expressed as percentages by weight.

The elastomeric composition used in the tyre tread according to the present invention comprises 100 phr of an elastomeric polymer composition which comprises, preferably consists of at least one styrene-butadiene polymer (SBR) in amounts ranging from 70 to 100 phr, and optionally from 0 to 30 phr of at least one elastomeric polymer selected from the group consisting of isoprene polymer (IR) and butadiene polymer (BR).

In the present context, styrene-butadiene (SBR) polymer is intended as a copolymer comprising monomer units of styrene and butadiene, with a percentage by weight of styrene preferably in the range from 10% to 55%, more preferably from 20% to 45%, and a weight percentage of vinyl (with respect to butadiene) preferably in the range from 10% to 70%, more preferably from 15% to 65%.

The styrene-butadiene polymer may contain, in addition to the styrene units and the butadiene units, a small amount, for example, equal to or less than 5% by weight, of additional monomer units such as isoprene, dimethylbutadiene, pentadiene, methylstyrene, ethylstyrene, divinylbenzene and diisopropenylbenzene.

Preferably, the styrene-butadiene polymer is a random polymer.

Preferably, the styrene-butadiene polymer may have a weight average molecular weight comprised between 100,000 and 2,000,000 g/mol, preferably between 150,000 and 1,000,000, more preferably between 200,000 and 600,000 g/mol.

The styrene-butadiene polymer may be prepared according to known techniques, for example as described in US2019062535, in US2019062529 or in US4547560.

Advantageously, the styrene-butadiene polymer (SBR) has a glass transition temperature (Tg) of between -45°C and -15°C, preferably between - 40°C and -20°C.

The glass transition temperature Tg of elastomeric polymers may be advantageously measured using a differential scanning calorimeter (DSC) according to methods well known to those skilled in the art [ISO 22768 "Rubber, green - Determination of the glass transition temperature by differential scanning calorimetry (DSC)"].

In one embodiment, the styrene-butadiene polymer is prepared by solution polymerisation (S-SBR).

Typically, solution synthesis provides polymers with a narrow molecular weight distribution, fewer chain branches, higher molecular weight and higher cis-1,4-polybutadiene content than polymers obtainable in emulsion.

In another embodiment, the styrene-butadiene polymer is prepared by emulsion polymerisation (E-SBR).

The styrene-butadiene polymer may be a functionalised polymer, such as for example the functionalised SBRs described in US2019062535 (par. 9 - 13), in US2019062529 (par. 19 - 22) in WO2017/211876A1 (component a) or in WO2015/086039A1.

The functional group may be introduced into the styrene-butadiene polymer by processes known in the art such as, for example, during the production of the styrene-butadiene polymer by copolymerisation with at least one corresponding functionalised monomer containing at least one ethylene unsaturation; or by subsequent modification of the styrene-butadiene polymer by grafting at least one functionalised monomer in the presence of a free radical initiator (for example, an organic peroxide).

Alternatively, the functionalisation may be introduced by reaction with suitable terminating agents or coupling agents. In particular, the styrene-butadiene polymers obtained by anionic polymerisation in the presence of an organometallic initiator (in particular, an organolithium initiator) may be functionalised by reacting the residual organometallic groups derived from the initiator with suitable terminating agents or coupling agents such as, for example, amines, amides, imines, carbodiimides, alkyltin halides, substituted benzophenones, alkoxysilanes, aryloxy silanes, alkyldithiols, alkyldithiolsilanes, carboxyalkylthiols, carboxyalkylthiolsilanes, and thioglycols.

Useful examples of terminating agents or coupling agents are known in the art and described, for example in patents EP2408626, EP2271682, EP3049447A1, EP2283046A1, EP2895515A1, WO2015/086039A1 and WO2017/211876A1.

Commercial examples of SBR polymers useful in the present invention are Tufdene E581 and E680 polymers from Ashai-Kasei (Japan), SPRINTAN SLR4602, SLR3402 and SLR4630 from Trinseo (Germany), BUNA SL-4518, BUNA SE 1502 and BUNA CB 22 from Arlanxeo (Germany), Europrene NEOCIS BR 60, Europrene 5543T, Europrene 1739 and Intol 1789 from Versalis (Italy), HP 755 from Japan Synthetic Rubber Co. (Japan), and NIPOL NS 522 from Zeon Co. (Japan).

In the present context, isoprene polymer or isoprene rubber (IR) means a synthetic or natural elastomer obtained by 1,4-cis addition of isoprene. Preferably, the isoprene polymer is a natural rubber (NR). Isoprene polymers and natural rubbers are well known to those skilled in the field of tyres. The isoprene polymer may optionally be functionalised with the same terminating or coupling agents described above.

Advantageously, the isoprene polymer has a Tg of between -80°C and - 50°C, preferably between -70°C and -60°C.

Commercial example of suitable isoprene polymer is SIR20 from Aneka Bumi Pratama or STR 20 from Thaiteck Rubber.

In the present context, butadiene polymer (BR) means a polymer deriving from the polymerisation of 1,3-butadiene, possibly in the presence of other conjugated diolefins, wherein 1,3-butadiene is present in an amount of not less than 50%, by weight with respect to the total weight of the polymer.

Examples of butadiene polymers commonly used in the industry are butadiene polymers with a high content of double 1,4-cis bonds, butadiene polymers with a high content of vinyl units, metallocene butadiene polymers, and 1,3-butadiene/acrylonitrile copolymers.

Advantageously, the butadiene polymer has a Tg of between -30°C and - 105°C, preferably between -50°C and -100°C.

Examples of butadiene polymers (BR) are the Europrene polymer Neocis^{®} BR40) - (Versalis), SKD NHEODYMIUM (Nizhnekamskneftechim Export), and BUNA CB 29 MES (Lanxess).

The elastomeric composition used for making the tyre tread according to the present invention also comprises from 50 to 100 phr of a mixture of resins and/or plasticising oils.

Preferably, the resins have a weight average molecular weight (Mw) of between 200 and 5,000 g/mol, preferably between 400 and 4,000 g/mol.

The weight average molecular weight (Mw) of resins may be measured according to known techniques in the field such as, for example, by SEC (Size-Exclusion Chromatography) according to the ASTM D6579-11 method "Standard Practice for Molecular Weight Averages and Molecular Weight Distribution of Hydrocarbon, Rosin and Terpene Resins by Size-Exclusion Chromatography".

The resins are preferably non-reactive resins, i.e. a non-cross-linkable polymer, preferably selected from the group comprising hydrocarbon resins, phenolic resins, natural resins and mixtures thereof.

The hydrocarbon resin may be aliphatic, aromatic or combinations thereof, meaning that the base polymer of the resin may consist of aliphatic and/or aromatic monomers.

The hydrocarbon resin may be natural (e.g. vegetable) or synthetic or derived from petroleum.

Preferably, the hydrocarbon resin is selected from homo- or copolymers of butadiene, homo- or copolymers of cyclopentadiene (CPD), dicyclopentadiene (DCPD), homo- or copolymers of terpene, homo- or copolymers of the C5 fraction and mixtures thereof, preferably DCPD/vinyl aromatic copolymers, DCPD/terpene copolymers, DCPD/C5 fraction copolymers, terpene/vinyl aromatic copolymers, C5 fractions/vinyl aromatic copolymers and combinations thereof.

Examples of vinyl aromatic monomers include styrene, alphamethylstyrene, ortho-, meta-, para-methylstyrene, vinyl-toluene, paraterbutylstyrene, methoxy-styrenes, chloro-styrenes, vinyl-mesitylene, divinylbenzenes, vinyl-naphthalenes, vinyl aromatic monomers derived from the C8-C10 fraction, in particular from C9.

Preferably, the hydrocarbon resin is selected from resins derived from coumarone-indene, styrene-indene, styrene-alkylstyrene, and aliphatic resins.

Specific examples of commercially available hydrocarbon resins are NOVARES resins from RUTGERS CHEMICAL GmbH (such as Novares TL90 and TT30 resins), UNILENE A 100 resin from Braskem, Sylvares SA 85 resin from Arizona Chemical, Kristalex F 85 and Piccotac 1100 resins from Eastman, Escorez^{®} 1102 resin from ExxonMobil, Pliolite S-6H resin from Omnova Solution, and Quintone A 100 resin from Zeon Chemicals.

The phenolic resin is selected from among the resins with alkylphenolformaldehyde base, alkylphenolic resins modified with rosin, resins alkylphenol-acetylene based, modified alkylphenolic resins and terpenephenol based resins.

Specific examples of commercially available phenolic resins which may be used in the present invention are: OFF APM (from Sinolegend) RESIN SP-1068 (from SI GROUP Inc.) (octylphenol-formaldehyde resin); DUREZ 32333 (from Sumitomo Bakelite) (tert-butylphenol-formaldehyde resin); KORESIN (from BASF Company) (p-t-butylphenol-acetylene resin); SYLVARES TP 115 (from Arizona Chemicals) (terpen-phenolic resin).

Natural resins may be terpene or rosin based.

Terpene-based resins are preferably homo or copolymers of alpha-pinene, beta-pinene, limonene, vinyl aromatic monomers (styrene) and/or aromatic monomers (phenol).

Examples of commercial terpene-based natural resins are: Piccolyte F90 and Piccolyte F105, from PINOVA; Dercolyte A 115, Dercolyte TS105 and Dercolyte M 115, from DRT.

The term rosin commonly indicates a mixture of isomeric organic acids (rosinic acids) characterised by a common structure, including three fused C6 rings, double bonds in different numbers and positions and a single carboxylic group, where the main component is abietic acid (C₂₀H₃₀O₂) and its dihydroabietic (C₂₀H₃₂O₂) and dehydroabietic (C₂₀H₂₈O₂) derivatives.

Examples of rosin-based resins are marketed by DRT under the name Hydrogral G and Dertoline P 105, and by Eastman under the name Staybelite, in particular Staybelite Ester 3-E.

Preferably, the resins have a glass transition temperature (Tg) ranging from -70°C to 150°C.

The plasticising oil may be, in whole or in part, from the commercial compositions of the elastomeric polymer (SBR, IR or BR), where it acts as an extender.

The term "plasticising oil" means a process oil derived from petroleum or a mineral oil or a vegetable oil or a synthetic oil or combinations thereof.

Preferably, the plasticising oil exhibits one or more of the following features:
a weight average molecular weight (M w) not higher than 600 g/mol or, if the class of the RAE, a weight average molecular weight of between 400 and 10000 g/mol, and/or
a glass transition temperature (Tg) lower than -30°C.

Preferably, the plasticising oil is a process oil derived from petroleum selected from paraffins (saturated hydrocarbons), naphthenes, aromatic polycyclic and mixtures thereof.

Examples of suitable process oils derived from petroleum are aromatic, paraffinic, naphthenic oils such as MES (Mild Extract Solvated), DAE (Distillate Aromatic Extract), TDAE (Treated Distillate Aromatic Extract), TRAE (Treated Residual Aromatic Extract ), RAE (Residual Aromatic Extract) known in the industry.

The term RAE means a complex mixture of mainly polycyclic aromatic hydrocarbons obtained by extracting the residue of distillation of crude oil with solvents (CAS No. 64742-10-5).

Preferably, the plasticising oil is a process oil derived from petroleum with a low aromatic content, selected for example from TDAE, TRAE, MES, paraffinic or naphthenic oils.

Examples of suitable plasticising oils are oils derived from petroleum: NYTEX 4700 marketed by Nynas, EXTENSOIL 1471 marketed by Repsol, VIVATEC 500 marketed by H&R; and vegetable oils: RADIA 6132 marketed by Oleon, Agripure AP 18 and Agripure AP 75 marketed by Cargill.

Preferably, the plasticising oil is an oil of natural or synthetic origin derived from the esterification of glycerol with fatty acids, comprising glycerin triglycerides, glycerin diglycerides, glycerin monoglycerides or mixtures thereof.

Preferably, these oils have a glass transition temperature (Tg) lower than - 70°C.

Examples of suitable vegetable oils are sunflower, soybean, linseed, rapeseed, castor and cotton oil.

Preferably, the plasticising oil is a synthetic oil selected from among the alkyl or aryl esters of phthalic acid or phosphoric acid. Preferably, these esters have a glass transition temperature (Tg) lower than -70°C.

These oils may be used alone or as a mixture.

Advantageously, the elastomeric composition typically comprises at least one reinforcing filler which may be selected from those commonly used for vulcanised manufactured products, in particular for tyres, such as for example: carbon black, silica and silicates, alumina, calcium carbonate, or mixtures thereof. Carbon black, silica and mixtures thereof are particularly preferred.

Preferably, said reinforcing filler may be present in the elastomeric composition in an amount of from 50 phr to 150 phr, more preferably from 70 phr to 130 phr.

According to a preferred embodiment, said carbon black reinforcing filler may be selected from those having a surface area of not less than 20 m²/g (as determined by Statistical Thickness Surface Area - STSA - according to ISO 18852:2005).

According to a preferred embodiment, said silica reinforcing filler may be, for example, precipitated silica.

The silica reinforcing fillers which may advantageously be used in the present invention preferably have a BET surface area of from about 30 m²/g to 400 m²/g, more preferably from about 100 m²/g to about 250 m²/g, even more preferably from about 120 m²/g to about 220 m²/g. The pH of said silica reinforcing filler is generally from about 5.5 to about 7, preferably from about 5.5 to about 6.8.

Examples of silica reinforcing fillers which may be used in the present invention and are commercially available are the products known under the names of Hi-Sil^{®} 190, Hi-Sil^{®} 210, Hi-Sil^{®} 233, Hi-Sil^{®} 243, available from PPG Industries (Pittsburgh, Pa.); or the products known by the names of Ultrasil^{®} VN2, Ultrasil^{®} VN3, Ultrasil^{®} 7000 from Evonik; or the products known by the names of Zeosil^{®} 1165MP and 1115MP from Solvay.

Advantageously, the elastomeric composition comprises at least one silane coupling agent capable of interacting with the reinforcing filler and binding it to the elastomeric polymer during vulcanisation.

The coupling agents which are preferably used are silane-based ones which may be identified, for example, by the following structural formula (VI):

(R₂)₃Si-CₜH₂t-X (VI)

wherein the R² groups, which may be equal or different from each other, are selected from: alkyl, alkoxy or aryloxy groups or halogen atoms, with the proviso that at least one of the R² groups is an alkoxy or an aryloxy group; t is an integer of between 1 and 6 inclusive; X is a group selected from nitrose, mercapto, amino, epoxide, vinyl, imide, chlorine, -(S)ᵤCₜH₂ₜ-Si-(R₂)₃ or -S-COR₂, wherein u and t are integers of between 1 and 6, ends included and the R² groups are as defined above.

Particularly preferred coupling agents are bis(3-triethoxysilylpropyl)tetrasulphide and bis(3-triethoxysilylpropyl)disulphide. Said coupling agents may be used as such or in a suitable mixture with an inert filler (such as carbon black) so as to facilitate their incorporation into the elastomeric composition.

Preferably, the coupling agent is added to the elastomeric composition in an amount ranging from 1 to 20% by weight, more preferably from 5 to 15% by weight, and even more preferably from 6 to 10% by weight with respect to the weight of silica.

The above elastomeric composition may be vulcanised according to known techniques, in particular with sulphur-based vulcanising systems commonly used for elastomeric polymers. To this end, after one or more thermomechanical processing steps, a sulphur-based vulcanization agent is incorporated in the composition, together with vulcanisation accelerants and/or retardants. In the final processing step, the temperature is generally kept below 120°C and preferably below 100°C, so as to prevent any undesired prevulcanisation phenomenon.

The vulcanization agent used in the most advantageous manner is sulphur or sulphur-containing molecules (sulphur donors), with vulcanisation activating agents, accelerants and retardants which are known to those skilled in the art.

Said vulcanization agent is used in the elastomeric composition in an amount of from 0.1 phr to 12 phr, preferably from 0.5 phr to 10 phr, more preferably from 1 phr to 5 phr.

Said vulcanisation activating agents are preferably employed in the elastomeric composition in an amount of from about 0.5 phr to about 10 phr, more preferably from 1 phr to 5 phr.

The accelerants which are commonly used may be selected from: dithiocarbamates, guanidine, thiourea, thiazoles, sulphenamides, thiurams, amines, xanthates or mixtures thereof.

Said vulcanisation accelerants are preferably used in the elastomeric composition in an amount of from about 0.5 phr to about 10 phr, more preferably from 1 phr to 5 phr.

Vulcanisation retardants which are commonly used may be selected, for example, from: urea, N-cyclohexyl-2-benzothiazolyl sulphenamide, N-cyclohexyl-phthalimide, N-cyclohexylthiophthalimide, N-nitrosodiphenylamine or mixtures thereof.

Said vulcanisation retardants are optionally used in the elastomeric composition in an amount lower than 1 phr, more preferably lower than 0.5 phr and, even more preferably, from about 0.1 phr to about 0.3 phr.

According to the present invention, the elastomeric composition comprises from 0.1 to 5 phr of an organic salt of zinc having the following structural formula: 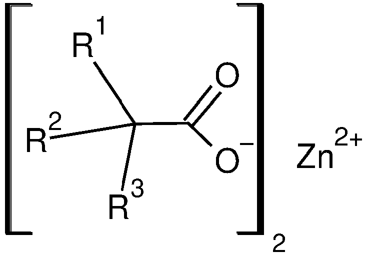 wherein the groups R¹, R² and R³, equal or different from each other, are a hydrogen atom or a linear or branched alkyl chain comprising from 1 to 10 carbon atoms, preferably from 1 to 8 carbon atoms, and wherein the groups R¹, R² and R³ comprise a total of from 8 to 10 carbon atoms.

Advantageously, the groups R¹, R² and R³, equal or different from each other, are a hydrogen or a linear or branched alkyl chain each comprising from 1 to 8 carbon atoms, and wherein said groups R¹, R² and R³ comprise a total of 8 carbon atoms.

Preferably, one of the alkyl chains represented by the groups R¹, R² and R³ comprises from 2 to 6 carbon atoms, and the other two alkyl chains represented by the groups R¹, R² and R³ comprise from 1 to 3 carbon atoms.

Alternatively, R¹ represents a linear or branched alkyl chain comprising 8 carbon atoms and R² and R³ are a hydrogen atom.

Advantageously, said organic salt of zinc is selected from the group consisting of the zinc salts of 2,2-dimethyl-octanoic acid, 2-methyl-2-ethyl-heptanoic acid, 2-methyl-2-isopropyl-hexanoic acid, 2,4-dimethyl-2-isopropyl-pentanoic acid, 2,2,3,5-tetramethyl-hexanoic acid, 2,2-diethyl-hexanoic acid, 4-methyl-2,2-diethyl-pentanoic acid, 2-ethyl-2-isopropyl-pentanoic acid, 2,2-isopropyl-butyric acid, 3,3,5,5-tetramethyl-hexanoic acid, 7,7-dimethyl-hexanoic acid, and mixtures thereof.

Preferably, the elastomeric composition comprises from 0.5 to 4 phr, advantageously from 1 to 3 phr of said organic salt of zinc.

Said organic salt of zinc acts as vulcanisation activating agents by distributing itself uniformly in the elastomeric compound and promoting a uniform vulcanisation and a uniform distribution of the cross-linking density.

An example of a suitable commercial product of said organic salt of zinc is distributed by Aldrich under the generic name of zinc neodecanoate.

The elastomeric composition may comprise other commonly used additives based on the specific application for which the composition will be used. For example, the following may be added to the elastomeric composition: antioxidant, anti-ageing agents, adhesives, antiozonants (in particular of the p-phenylenediamine type), waxes, fibres (for example Kevlar^{®} paste), or mixtures thereof.

The vulcanisable elastomeric compound resulting from the elastomeric composition and the addition of the above additives may be prepared by mixing together the basic elastomeric components together with the other optionally present additives, according to the techniques known in the art. The mixing steps may be carried out, for example, using an open mixer of the cylinder type or an internal mixer of the type with tangential rotors (Banbury) or with interpenetrating rotors (Intermix), or in continuous mixers of the Ko-Kneader type (Buss) or of the co-rotating or counter-rotating twin-screw type.

### DRAWINGS

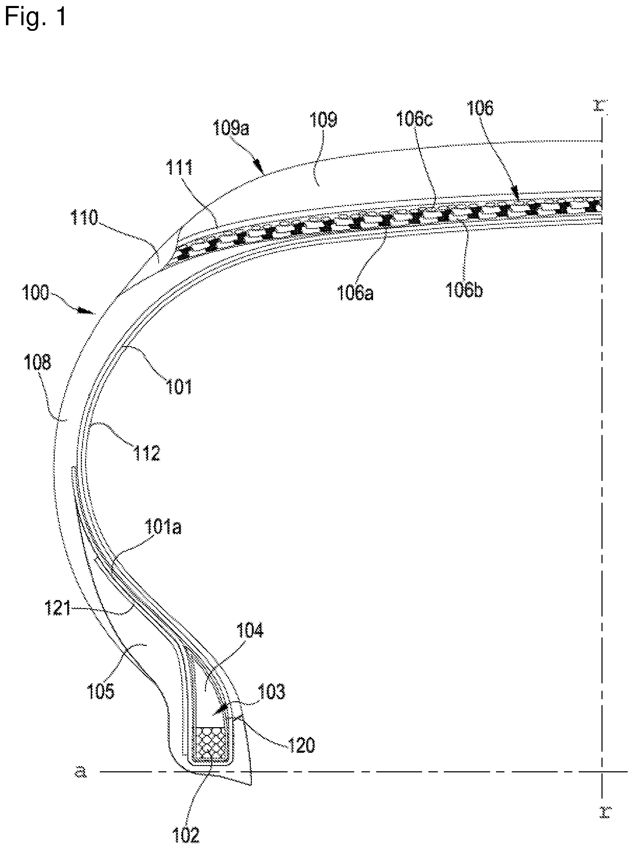

Figure 1 schematically shows a semi-sectional view of a tyre for vehicle wheels according to the present invention.

### DETAILED DESCRIPTION OF THE INVENTION

The present invention will be illustrated in further detail by means of an illustrative embodiment with reference to the accompanying Figure 1, where "a" indicates an axial direction and "r" indicates a radial direction. For simplicity, Figure 1 shows only a part of the tyre, the remaining part not shown being identical and disposed symmetrically with respect to the radial direction "r".

The reference numeral 100 indicates in Figure 1 a tyre for vehicle wheels, which generally comprises a carcass structure 101 having respectively opposite end flaps engaged with respective annular anchoring structures 102, called bead cores, possibly associated with a bead filler 104. The tyre area comprising the bead core 102 and the filler 104 forms a bead structure 103 intended for anchoring the tyre onto a corresponding mounting rim, not shown. Each bead structure 103 is associated to the carcass structure by folding back of the opposite lateral edges of the at least one carcass layer 101 around the bead core 102 so as to form the so-called carcass flaps 101a as shown in Figure 1.

The carcass structure 101 is possibly associated with a belt structure 106 comprising one or more belt layers 106a, 106b placed in radial superposition with respect to one another and with respect to the carcass structure 101, having typically metal reinforcing cords. Such reinforcing cords may have crossed orientation with respect to a circumferential extension direction of the tyre 100. By "circumferential" direction we mean a direction generally facing according to the direction of rotation of the tyre, or in any case slightly inclined with respect to the direction of rotation of the tyre.

The belt structure 106 further comprises at least one radially external reinforcing layer 106c with respect to the belt layers 106a, 106b. The radially external reinforcing layer 106c comprises textile or metal cords, disposed according to a substantially zero angle with respect to the circumferential extension direction of the tyre and immersed in the elastomeric material. Preferably, the cords are disposed substantially parallel and side by side to form a plurality of turns. Such turns are substantially oriented according to the circumferential direction (typically with an angle of between 0° and 5°), such direction being usually called "zero degrees" with reference to the laying thereof with respect to the equatorial plane X-X of the tyre. By "equatorial plane" of the tyre it is meant a plane perpendicular to the axis of rotation of the tyre and which divides the tyre into two symmetrically equal parts.

In a radially external position with respect to the carcass structure 101 and/or if present (as in the illustrated case) to the belt structure 106 a tread band 109 in vulcanised elastomeric compound obtained by vulcanisation of the vulcanisable elastomeric compound according to the present invention is applied.

In a radially external position, the tread band 109 has a rolling portion 109a intended to come into contact with the ground. Circumferential grooves, which are connected by transverse notches (not shown in Figure 1) so as to define a plurality of blocks of various shapes and sizes distributed in the rolling portion 109a, are generally made in this portion 109a, which for simplicity is represented smooth in Figure 1.

To optimise the performance of the tread, the tread band may be made in a two-layer structure.

Such two-layer structure comprises the rolling layer or portion 109a (called cap) and a substrate 111 (called base) forming the so-called cap-and-base structure. It is thus possible to use an elastomeric material capable of providing a low rolling resistance for the cap 109a and at the same time high resistance to wear and to the formation of cracks while the elastomeric material of the substrate 111 may be particularly aimed at a low hysteresis to cooperate in reducing rolling resistance. One or both layers of the cap-and-base structure may be made with a vulcanised elastomeric compound obtained by vulcanising the vulcanisable elastomeric compound according to the present invention. The under-layer 111 of vulcanised elastomeric compound may be disposed between the belt structure 106 and the rolling portion 109a.

Moreover, respective sidewalls 108 of vulcanised elastomeric compound are further applied in an axially external position to said carcass structure 101, each extending from one of the lateral edges of the tread band 109 up to the respective bead structure 103.

A strip consisting of elastomeric compound 110, commonly known as "minisidewall", of vulcanised elastomeric compound may optionally be provided in the connecting zone between sidewalls 108 and the tread band 109, this minisidewall generally being obtained by co-extrusion with the tread band 109 and allowing an improvement of the mechanical interaction between the tread band 109 and the sidewalls 108. Preferably, the end portion of sidewall 108 directly covers the lateral edge of the tread band 109.

In some specific embodiments, such as the one illustrated and described herein, the stiffness of the bead 103 may be improved by providing a reinforcing layer 120 generally known as a "flipper" in the tyre bead.

The flipper 120 is wrapped around the respective bead core 102 and the bead filler 104 so as to at least partially surround them. The flipper 120 is disposed between the carcass layer 101 and the bead structure 103. Usually, the flipper 120 is in contact with the carcass layer 101 and said bead structure 103. The flipper 120 typically comprises a plurality of metal or textile cords incorporated in a vulcanised elastomeric compound.

In some specific embodiments, such as the one illustrated and described herein, the bead structure 103 may further comprise a further protective layer 121 which is generally known by the term of "chafer", or protective strip, and which has the function to increase the rigidity and integrity of the bead structure 103.

The chafer 121 usually comprises a plurality of cords incorporated in a vulcanised elastomeric compound; such cords are generally made of textile material (for example aramid or rayon), or of metallic material (for example steel cords).

Optionally, an anti-abrasive strip 105 is disposed so as to wrap the bead structure 103 along the axially internal and external and radially internal areas of the bead structure 103, thus interposing itself between the latter and the wheel rim when the tyre 100 is mounted on the rim.

Moreover, a radially internal surface of tyre 100 is preferably internally lined by a layer of substantially airtight elastomeric material, or so-called liner 112.

According to an embodiment not shown, the tyre may be a tyre for motorcycle wheels. The profile of the straight section of the tyre for motorcycle (not shown) has a high transversal curvature since it must guarantee a sufficient footprint area in all the inclination conditions of the motorcycle. The transverse curvature is defined by the value of the ratio between the distance f of the ridge of the tread from the line passing through the laterally opposite ends of the tread itself, measured on the equatorial plane of the tyre, and the width C defined by the distance between the laterally opposite ends of the tread itself. A tyre with high transverse curvature indicates a tyre whose transverse curvature ratio (f/C) is at least 0.20.

The building of the tyre 100 as described above is carried out by assembling respective semi-finished products onto a forming drum, not shown, by at least one assembly device.

At least a part of the components intended to form the carcass structure 101 of the tyre 100 is built and/or assembled on the forming drum. More particularly, the forming drum is intended to first receive the possible liner 112, and then the carcass ply 101. Thereafter, devices non shown coaxially engage one of the annular anchoring structures 102 around each of the end flaps, position an external sleeve comprising the belt structure 106 and the tread band 109 in a coaxially centred position around the cylindrical carcass sleeve and shape the carcass sleeve according to a toroidal configuration through a radial expansion of the carcass ply 101, so as to cause the application thereof against a radially internal surface of the external sleeve.

After building of the green tyre 100, a moulding and vulcanisation treatment is generally carried out in order to determine the structural stabilisation of the tyre 100 through vulcanisation of the elastomeric compounds, as well as to impart a desired tread pattern on the tread band 109 and to impart any distinguishing graphic signs at the sidewalls 108.

The present invention will be further illustrated below by means of a number of preparatory examples, which are provided for indicative purposes only and without any limitation of the present invention.

### EXAMPLES

### Methods of analysis

MDR rheometric analysis: the analysis was carried out according to the ISO 6502 method, with an Alpha Technologies model MDR2000 rheometer, at 170°C and for 30 minutes.

The applied oscillation frequency was 1.66Hz with an oscillation width of ± 0.5°. The time required to respectively reach 30% (T30), 60% (T60) and 90% (T90) of the maximum torque MH was measured. The maximum torque value MH and the minimum torque value ML were also measured.

IRHD hardness: IRHD hardness (23°C) was measured on vulcanised compounds according to ISO 48: 2007.

Stress deformation properties: the static mechanical properties were measured according to ISO 37:2005, on O-rings. Strength was evaluated at different elongations (50%, 100% and 300%, respectively, CA05, CA1 and CA3). CR (load at break) and AR (elongation at break) were also measured.

Dynamic Mechanical Analysis (MTS): the dynamic mechanical properties were measured using an Instron dynamic device in compression and tension operation by the following method. A sample of vulcanised elastomeric cylindrical compositions (height = 25 mm; diameter = 14 mm), preload in compression up to 25% of longitudinal deformation with respect to the initial length and maintained at the predetermined temperature (23°C) during the test was subjected to a dynamic sinusoidal strain with amplitude ± 3.5% with respect to the length of the preload, at a frequency of 10Hz.

The dynamic mechanical properties are expressed in terms of dynamic elastic modulus (E') and Tan delta (loss factor). The Tan delta value was calculated as the ratio between the viscous dynamic module (E") and the dynamic elastic modulus (E').

Wear resistance: wear resistance was evaluated according to the Grosch LAT 100 machine test. The specimen is a solid wheel made of the vulcanised compound to be tested, which is made to slide under load on a rotating abrasion disc with a slip angle with respect to the direction of rotation.

The tested samples were then attributed a relative wear resistance index equal to the ratio of the wear resistance measured for the sample under test compared to the reference sample. The higher the value of this index, the better the wear resistance of the sample under test.

### Example 1

### Preparation of elastomeric compounds for winter tyre treads

The composition of the elastomeric compounds A-D for winter tyre treads is shown in the following Table 1. All values are expressed in phr.

**TABLE 1**

| | **Compound A Reference** | **Compound C Comparison** | **Compound B Invention** | **Compound D Invention** |
|---|---|---|---|---|
| S-SBR | 85.00 | 100.00 | 85.00 | 100.00 |
| NR | 15.00 | - | 15.00 | - |
| Carbon black | 10.00 | 10.00 | 10.00 | 10.00 |
| Silica | 116.00 | 116.00 | 116.00 | 116.00 |
| TESPT | 8.00 | 8.00 | 8.00 | 8.00 |
| Resin | 38.00 | 38.00 | 38.00 | 38.00 |
| Oil | 34.00 | 34.00 | 34.00 | 34.00 |
| ZnO | 2.00 | 2.00 | - | - |
| Zinc salt | - | - | 2.00 | 2.00 |
| TBzTD | 1.00 | 1.00 | 1.00 | 1.00 |
| CBS | 2.50 | 2.50 | 2.50 | 2.50 |
| Sulphur | 1.50 | 1.50 | 1.50 | 1.50 |

| | | | | |
|---|---|---|---|---|
| NR: natural rubber (Standard Thai Rubber STR 20 - Thaiteck Rubber); S-SBR: functionalised styrene-butadiene rubber comprising 15% by weight of styrene and 30% by weight of vinyl with respect to the butadiene content, produced by anionic polymerisation in solution using an organo-lithium initiator, SLR 3402 from Trinseo; Carbon black: N234 from Cabot Corporation; Silica: ZEOSIL^{®} 1165 MP, standard grade with surface area of approx. 175 m²/d from Solvay; TESPT: bis[3-(triethoxysilyl)propyl]tetrasulphide JH-S69 from ChemSpec Ltd.; Oil: MES (Mild Extract Solvated) CLEMATIS MS from ENI; Resin: Alpha-methylstyrenic resin (IMPERA P2504; EASTMAN; Tr 105°C); Zinc salt: Zinc bis-neodecanoate (Valikat 1910 from Umicore) ZnO: Standard Zn oxide from A-Esse; TBzTD: tetrabenzylthiuram disulphide (Perkacit^{®} TBZTD); CBS: N-cyclohexylbenzothiazole-2-sulphenamide RUBENAMID C EG/C from GENERAL QUIMICA. Sulphur: Insoluble sulphur 67%, Solfotecnica | | | | |

### Evaluation of the elastomeric compounds A-D performance

Starting from the elastomeric compositions shown in Table 1, the corresponding elastomeric compounds were prepared according to the following process.

The mixing of the components was carried out in two steps using an internal mixer (Banbury, Intermix or Brabender)

In the first mixing step (1), all the ingredients were introduced with the exception of vulcanisers and accelerants. The mixing was continued for a maximum time of 5 minutes, reaching a temperature of approximately 145°C. Subsequently, in the second mixing step (2), again carried out using an internal mixer, the vulcanisers and accelerants were added, and the mixing was continued for about 4 minutes while maintaining the temperature below 100°C. The compounds were then unloaded. After cooling and at least 12 hours from preparation, some samples of the compounds were vulcanised in a press at 170°C for 10 min to give the specimens useful for mechanical characterisations.

### Laboratory tests

The features of each elastomeric compound A-D were evaluated as previously described in the section "analysis methods" and the results are summarised in the following Table 2.

**TABLE 2**

| | **Reference compound A** | **Comparison compound C** | **Invention compound B** | **Invention compound D** |
|---|---|---|---|---|
| IRHD hardness | 67.3 | 69.5 | 65.4 | 69.4 |
| Wear resistance (% compared to reference) | 100 | 97 | 112 | 121 |

| MDR | | | | |
|---|---|---|---|---|
| ML | 2.6 | 3.0 | 3.7 | 4.6 |
| MH | 15.3 | 15.5 | 13 | 15.0 |
| T30 | 2.52 | 2.52 | 2.14 | 2.05 |
| T60 | 3.25 | 3.26 | 2.54 | 2.47 |
| T90 | 5.4 | 5.5 | 3.5 | 3.5 |

| Static properties | | | | |
|---|---|---|---|---|
| Ca05 | 1.05 | 1.09 | 1.00 | 1.17 |
| Ca1 | 1.54 | 1.62 | 1.47 | 1.70 |
| Ca3 | 6.5 | 7.0 | 6.1 | 6.9 |
| AR | 16.8 | 17.1 | 15.7 | 15.8 |
| CR | 643 | 611 | 613 | 573 |

| Dynamic properties | | | | |
|---|---|---|---|---|
| E' 10Hz/23°C | 6.3 | 6.8 | 6.4 | 7.2 |
| Tanδ 10Hz/23°C | 0.283 | 0.277 | 0.296 | 0.289 |

The results of Table 2 showed that the comparison compound, made with a single elastomeric polymer, did not involve advantages in terms of wear resistance, while on the contrary the compounds of the invention comprising zinc bis-neodecanoate showed a significant increase, surprisingly greater with the compound D made with a single elastomeric polymer.

### Driving tests

Winter tyres for passenger cars with treads prepared by vulcanisation of the elastomeric compositions A-D were produced and subjected to driving tests.

All tyres measured 225/45 R17 with 6.0J rim and pressure of 2.2 bar for the front tyres and 2 bar for the rear. The tests were carried out by equipping a Volkswagen Golf car for tests on snow and a Fiat Punto for the other tests.

Braking tests on dry and wet roads, and driving tests on snow-covered road were conducted.

The braking test, in both dry and wet conditions, is carried out with winter tyres fitted to a vehicle equipped with wheel anti-blocking system (A.B.S.).

This braking test was carried out on a straight asphalt section both in dry and wet conditions, measuring the stopping distance from a predetermined initial speed, typically 100 km/h in dry conditions and 80 km/h in wet conditions.

The driving test on snow-covered road was carried out by subjecting the vehicle to acceleration from 0 to 35/40 km/h, where the tensile force exerted by the winter tyre on the road surface covered with snow is detected by means of accelerometers.

Rolling resistance (RR) measurements were carried out on the sample tyres according to the UNECE reg. 117 Rev.4 annex 6 - ISO 28580:2018 (par. 4b (torque method) - Notification No. 2011-237 (Korea). The rolling resistance coefficient was expressed in N/kN.

The tyres thus tested were then assigned a relative rolling resistance index equal to the ratio of the rolling resistance measured for the tyre in question with respect to the reference tyre. The higher the value of this index, the lower the rolling resistance of the tyre under test and therefore the better its performance.

The results of the driving tests are shown in the following Table 3, where the rating is measured again by setting the rating of the reference winter tyre having the elastomeric composition A equal to 100.

**TABLE 3**

| | **Reference compound A** | **Comparison compound C** | **Invention compound B** | **Invention compound D** |
|---|---|---|---|---|
| Dry braking | 100 | 100 | 100 | 100 |
| Braking on wet | 100 | 98 | 100 | 100 |
| Snow traction | 100 | 100 | 97 | 103 |
| Rolling resistance | 100 | 104 | 100 | 104 |

The results of Table 3 demonstrated the maintenance of the performance of the tyres made with the compound B of the invention, showing a surprising and unexpected increase in the performance relative to driving on snow and in the rolling resistance for tyres made with the compound D of the invention compared to the reference compound A.

## Claims

1. Tyre for vehicle wheels comprising:
- a carcass structure, having opposite side edges associated with respective bead structures;
- optionally, a belt structure applied in a radially external position with respect to said carcass structure;
- a tread band applied in a radially external position with respect to said carcass and/or belt structure;
**characterized in that** said tread band comprises a vulcanised elastomeric compound obtained by vulcanisation of a vulcanisable elastomeric compound made by mixing an elastomeric composition, wherein said elastomeric composition comprises:
(i) 100 phr of an elastomeric polymer composition comprising:
a. at least one styrene-butadiene polymer (SBR) in an amount of from 70 to 100 phr, and
b. optionally, from 0 to 30 phr of at least one elastomeric polymer selected from the group consisting of isoprene polymer (IR) and butadiene polymer (BR),
(ii) from 50 to 100 phr of a mixture of resins and/or plasticising oils,
(iii) at least one reinforcing filler in an amount of from 50 to 130 phr,
(iv) at least one vulcanising agent in an amount of from 0.1 to 12 phr, and
(v) from 0.1 to 5 phr of an organic salt of zinc having the following structural formula 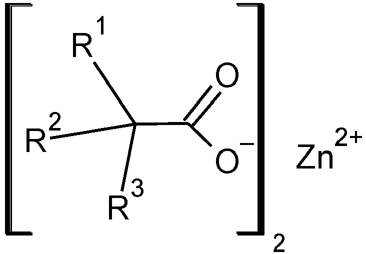
wherein the groups R¹, R² and R³, equal or different from each other, are a hydrogen atom or a linear or branched alkyl chain comprising from 1 to 10 carbon atoms, and wherein the groups R¹, R² and R³ comprise a total of from 8 to 10 carbon atoms.

2. Tyre for vehicle wheels according to claim 1, wherein said groups R¹, R² and R³, equal or different from each other, are a hydrogen atom or a linear or branched alkyl chain each comprising from 1 to 8 carbon atoms, and wherein said groups R¹, R² and R³ comprise a total of 8 carbon atoms.

3. Tyre for vehicle wheels according to claim 1, wherein one of the alkyl chains represented by said groups R¹, R² and R³ comprises from 2 to 6 carbon atoms, and the other two alkyl chains represented by said groups R¹, R² and R³ comprise from 1 to 3 carbon atoms.

4. Tyre for vehicle wheels according to claim 1, wherein R¹ represents a linear or branched alkyl chain comprising 8 carbon atoms and R² and R³ are a hydrogen atom.

5. Tyre for vehicle wheels according to claim 1, wherein said organic salt of zinc is selected from the group consisting of the zinc salts of 2,2-dimethyl-octanoic acid, 2-methyl-2-ethyl-heptanoic acid, 2-methyl-2-isopropyl-hexanoic acid, 2,4-dimethyl-2-isopropyl-pentanoic acid, 2,2,3,5-tetramethyl-hexanoic acid, 2,2-diethyl-hexanoic acid, 4-methyl-2,2-diethyl-pentanoic acid, 2-ethyl-2-isopropyl-pentanoic acid, 2,2-isopropyl-butyric acid, 3,3,5,5-tetramethyl-hexanoic acid, 7,7-dimethyl-hexanoic acid, and mixtures thereof.

6. Tyre for vehicle wheels according to any one of claims 1 to 5, wherein said elastomeric composition comprises from 0.5 to 4 phr of said organic salt of zinc.

7. Tyre for vehicle wheels according to any one of claims 1 to 6, wherein said styrene-butadiene polymer (SBR), optionally functionalized with termination or coupling agents, comprises monomeric units of styrene and butadiene, with a weight percentage of styrene in the range of from 10% to 55%, and a weight percentage of vinyl (relative to butadiene) in the range of from 10% to 70%.

8. Tyre for vehicle wheels according to any one of claims 1 to 6, wherein said isoprene polymer (IR) is a natural or synthetic elastomer obtained by 1,4-cis addition of isoprene, optionally functionalized with terminating or coupling agents.

9. Tyre for vehicle wheels according to any one of claims 1 to 6, wherein said butadiene polymer (BR) is a polymer resulting from the polymerization of 1,3-butadiene, possibly in the presence of other conjugated diolefins, wherein the 1,3-butadiene is present in an amount of not less than 50% by weight relative to the total weight of the polymer.

10. Tyre for vehicle wheels according to any one of claims 1 to 5, wherein said elastomeric composition comprises from 1 to 3 phr of said organic salt of zinc.

11. Tyre for vehicle wheels according to any one of claims 1 to 6, wherein said styrene-butadiene polymer (SBR), optionally functionalized with termination or coupling agents, comprises monomeric units of styrene and butadiene, with a weight percentage of styrene in the range of from 20% to 45%, and a weight percentage of vinyl (relative to butadiene) in the range of from 15% to 65%.

12. Tyre for vehicle wheels according to any one of claims 1 to 6, wherein said isoprene polymer (IR) is natural rubber (NR), optionally functionalized with terminating or coupling agents.

13. A vulcanisable elastomeric compound made by mixing an elastomeric composition, wherein said elastomeric composition comprises:
(i) 100 phr of an elastomeric polymer composition comprising:
a. at least one styrene-butadiene polymer (SBR) in an amount of from 70 to 100 phr, and
b. optionally, from 0 to 30 phr of at least one elastomeric polymer selected from the group consisting of isoprene polymer (IR) and butadiene polymer (BR),
(ii) from 50 to 100 phr of a mixture of resins and/or plasticising oils,
(iii) at least one reinforcing filler in an amount of from 50 to 130 phr,
(iv) at least one vulcanising agent in an amount of from 0.1 to 12 phr, and
(v) from 0.1 to 5 phr of an organic salt of zinc having the following structural formula 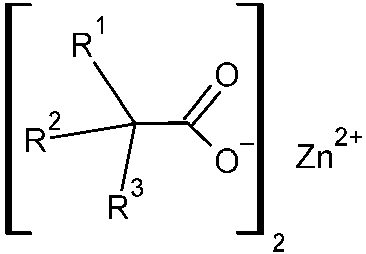 wherein the groups R¹, R² and R³, equal or different from each other, are a hydrogen atom or a linear or branched alkyl chain comprising from 1 to 10 carbon atoms, and wherein the groups R¹, R² and R³ comprise a total of from 8 to 10 carbon atoms.

14. Vulcanisable elastomeric compound according to claim 13, wherein said elastomeric composition comprises from 0.5 to 4 phr of said organic salt of zinc.

15. Vulcanisable elastomeric compound according to claim 13, wherein said styrene-butadiene polymer (SBR), optionally functionalized with termination or coupling agents, comprises monomeric units of styrene and butadiene, with a weight percentage of styrene in the range of from 10% to 55%, and a weight percentage of vinyl (relative to butadiene) in the range of from 10% to 70%.

## Patentansprüche

1. Reifen für Fahrzeugräder, umfassend:
- eine Karkassenstruktur mit gegenüberliegenden Seitenrändern, die jeweiligen Wulststrukturen zugeordnet sind;
- optional eine Gürtelstruktur, die in einer radial äußeren Position in Bezug auf die Karkassenstruktur angebracht ist;
- ein Laufflächenband, das in einer radial äußeren Position in Bezug auf die Karkassen- und/oder Gürtelstruktur angebracht ist;
**dadurch gekennzeichnet, dass** das Laufflächenband eine vulkanisierte Elastomerverbindung umfasst, die durch Vulkanisation einer vulkanisierbaren Elastomerverbindung erhalten wird, die durch Mischen einer Elastomerzusammensetzung hergestellt wird, wobei die Elastomerzusammensetzung umfasst:
(i) 100 phr einer elastomeren Polymerzusammensetzung, umfassend:
a. mindestens ein Styrol-Butadien-Polymer (SBR) in einer Menge von 70 bis 100 phr und
b. optional 0 bis 30 phr mindestens eines elastomeren Polymers, ausgewählt aus der Gruppe bestehend aus Isoprenpolymer (IR) und Butadienpolymer (BR),
(ii) 50 bis 100 phr einer Mischung aus Harzen und/oder weichmachenden Ölen,
(iii) mindestens einen verstärkenden Füllstoff in einer Menge von 50 bis 130 phr,
(iv) mindestens ein Vulkanisationsmittel in einer Menge von 0,1 bis 12 phr und
(v) 0,1 bis 5 phr eines organischen Zinksalzes, das die folgenden Strukturformel aufweist 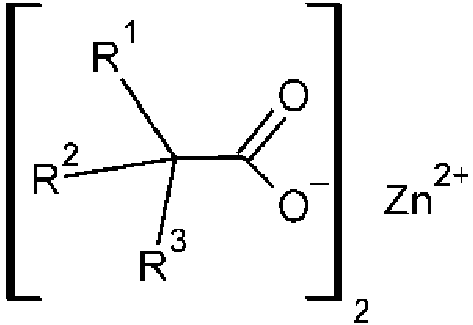
wobei die Gruppen R¹, R² und R³, gleichermaßen oder unterschiedlich voneinander, ein Wasserstoffatom oder eine lineare oder verzweigte Alkylkette sind, die 1 bis 10 Kohlenstoffatome umfasst, und wobei die Gruppen R¹, R² und R³ insgesamt 8 bis 10 Kohlenstoffatome umfassen.

2. Reifen für Fahrzeugräder nach Anspruch 1, wobei die Gruppen R¹, R² und R³, gleichermaßen oder unterschiedlich voneinander, ein Wasserstoffatom oder eine lineare oder verzweigte Alkylkette sind, die jeweils 1 bis 8 Kohlenstoffatome umfasst, und wobei die Gruppen R¹, R² und R³ insgesamt 8 Kohlenstoffatome umfassen.

3. Reifen für Fahrzeugräder nach Anspruch 1, wobei eine der durch die Gruppen R¹, R² und R³ dargestellten Alkylketten 2 bis 6 Kohlenstoffatome umfasst und die anderen beiden durch die Gruppen R¹, R² und R³ dargestellten Alkylketten 1 bis 3 Kohlenstoffatome umfassen.

4. Reifen für Fahrzeugräder nach Anspruch 1, wobei R¹ eine lineare oder verzweigte Alkylkette darstellt, die 8 Kohlenstoffatome umfasst, und R² und R³ ein Wasserstoffatom sind.

5. Reifen für Fahrzeugräder nach Anspruch 1, wobei das organische Zinksalz aus der Gruppe ausgewählt ist, die aus den Zinksalzen von 2,2-Dimethyloctansäure, 2-Methyl-2-ethylheptansäure, 2-Methyl-2-isopropylhexansäure, 2,4-Dimethyl-2-isopropylpentansäure, 2,2,3,5-Tetramethylhexansäure, 2,2-Diethylhexansäure, 4-Methyl-2,2-diethylpentansäure, 2-Ethyl-2-isopropylpentansäure, 2,2-Isopropylbuttersäure, 3,3,5,5-Tetramethylhexansäure, 7,7-Dimethylhexansäure und Gemischen davon besteht.

6. Reifen für Fahrzeugräder nach einem der Ansprüche 1 bis 5, wobei die Elastomerzusammensetzung 0,5 bis 4 phr des organischen Zinksalzes umfasst.

7. Reifen für Fahrzeugräder nach einem der Ansprüche 1 bis 6, wobei das Styrol-Butadien-Polymer (SBR), das gegebenenfalls mit Terminierungs- oder Kopplungsmitteln funktionalisiert ist, monomere Einheiten aus Styrol und Butadien umfasst, mit einem Gewichtsanteil von Styrol im Bereich von 10 % bis 55 % und einem Gewichtsanteil von Vinyl (bezogen auf Butadien) im Bereich von 10 % bis 70 %.

8. Reifen für Fahrzeugräder nach einem der Ansprüche 1 bis 6, wobei das Isoprenpolymer (IR) ein natürliches oder synthetisches Elastomer ist, das durch 1,4-cis-Addition von Isopren erhalten wird und gegebenenfalls mit Terminierungs- oder Kopplungsmitteln funktionalisiert ist.

9. Reifen für Fahrzeugräder nach einem der Ansprüche 1 bis 6, wobei das Butadienpolymer (BR) ein Polymer ist, das aus der Polymerisation von 1,3-Butadien, gegebenenfalls in Gegenwart anderer konjugierter Diolefine, resultiert, wobei das 1,3-Butadien in einer Menge von nicht weniger als 50 Gew.-%, bezogen auf das Gesamtgewicht des Polymers, vorhanden ist.

10. Reifen für Fahrzeugräder nach einem der Ansprüche 1 bis 5, wobei die Elastomerzusammensetzung 1 bis 3 phr des organischen Zinksalzes umfasst.

11. Reifen für Fahrzeugräder nach einem der Ansprüche 1 bis 6, wobei das Styrol-Butadien-Polymer (SBR), das gegebenenfalls mit Terminierungs- oder Kopplungsmitteln funktionalisiert ist, monomere Einheiten aus Styrol und Butadien umfasst, mit einem Gewichtsprozentsatz von Styrol im Bereich von 20 % bis 45 % und einem Gewichtsprozentsatz von Vinyl (bezogen auf Butadien) im Bereich von 15 % bis 65 %.

12. Reifen für Fahrzeugräder nach einem der Ansprüche 1 bis 6, wobei das Isoprenpolymer (IR) Naturkautschuk (NR) ist, der gegebenenfalls mit Terminierungs- oder Kopplungsmitteln funktionalisiert ist.

13. Vulkanisierbare Elastomerverbindung, die durch Mischen einer Elastomerzusammensetzung hergestellt wird, wobei die Elastomerzusammensetzung umfasst:
(i) 100 phr einer elastomeren Polymerzusammensetzung, umfassend:
a. mindestens ein Styrol-Butadien-Polymer (SBR) in einer Menge von 70 bis 100 phr und
b. optional 0 bis 30 phr mindestens eines elastomeren Polymers, ausgewählt aus der Gruppe bestehend aus Isoprenpolymer (IR) und Butadienpolymer (BR),
(ii) 50 bis 100 phr einer Mischung aus Harzen und/oder weichmachenden Ölen,
(iii) mindestens einen verstärkenden Füllstoff in einer Menge von 50 bis 130 phr,
(iv) mindestens ein Vulkanisationsmittel in einer Menge von 0,1 bis 12 phr und
(v) 0,1 bis 5 phr eines organischen Zinksalzes, das die folgenden Strukturformel aufweist 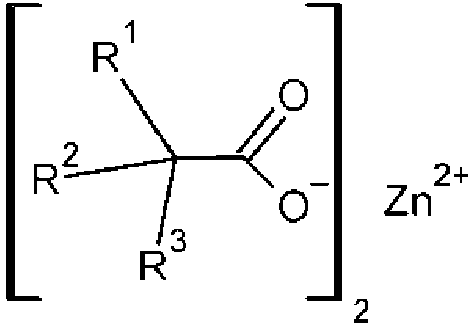 wobei die Gruppen R¹, R² und R³, gleichermaßen oder unterschiedlich voneinander, ein Wasserstoffatom oder eine lineare oder verzweigte Alkylkette sind, die 1 bis 10 Kohlenstoffatome umfasst, und wobei die Gruppen R¹, R² und R³ insgesamt 8 bis 10 Kohlenstoffatome umfassen.

14. Vulkanisierbare Elastomerverbindung nach Anspruch 13, wobei die Elastomerzusammensetzung 0,5 bis 4 phr des organischen Zinksalzes umfasst.

15. Vulkanisierbare Elastomerverbindung nach Anspruch 13, wobei das Styrol-Butadien-Polymer (SBR), das gegebenenfalls mit Terminierungs- oder Kupplungsmitteln funktionalisiert ist, monomere Einheiten aus Styrol und Butadien umfasst, mit einem Gewichtsprozentsatz von Styrol im Bereich von 10 % bis 55 % und einem Gewichtsprozentsatz von Vinyl (bezogen auf Butadien) im Bereich von 10 % bis 70 %.

## Revendications

1. Pneu pour roues de véhicule, comprenant :
- une structure de carcasse, ayant des bords latéraux opposés associés à des structures de talon respectives ;
- éventuellement, une structure de ceinture appliquée dans une position radialement externe par rapport à ladite structure de carcasse ;
- une bande de roulement appliquée dans une position radialement externe par rapport à ladite structure de carcasse et/ou de ceinture.
**caractérisée en ce que** ladite bande de roulement comprend un composé élastomère vulcanisé obtenu par vulcanisation d'un composé élastomère vulcanisable obtenu par mélange d'une composition élastomère, dans laquelle ladite composition élastomère comprend :
(i) 100 phr d'une composition polymère élastomère comprenant :
a. au moins un polymère styrène-butadiène (SBR) en une quantité de 70 à 100 phr, et
b. éventuellement, de 0 à 30 phr d'au moins un polymère élastomère choisi dans le groupe constitué par le polymère d'isoprène (IR) et le polymère de butadiène (BR),
(ii) de 50 à 100 phr d'un mélange de résines et/ou d'huiles plastifiantes,
(iii) au moins une charge renforçante en une quantité de 50 à 130 phr,
(iv) au moins un agent de vulcanisation en une quantité de 0,1 à 12 phr, et
(v) de 0,1 à 5 phr d'un sel organique de zinc ayant la formule développée suivante 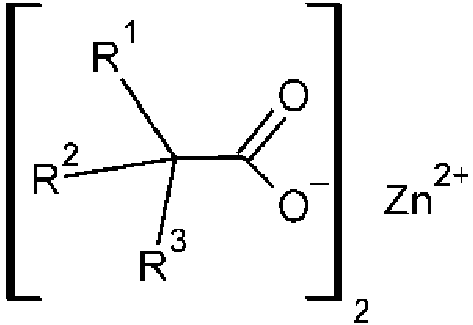
dans laquelle les groupes R¹, R² et R³, égaux ou différents entre eux, sont un atome d'hydrogène ou une chaîne alkyle linéaire ou ramifiée comprenant de 1 à 10 atomes de carbone, et dans laquelle les groupes R¹, R² et R³ comprennent un total de 8 à 10 atomes de carbone.

2. Pneu pour roues de véhicule selon la revendication 1, dans lequel lesdits groupes R¹, R² et R³, égaux ou différents entre eux, sont un atome d'hydrogène ou une chaîne alkyle linéaire ou ramifiée comprenant chacun de 1 à 8 atomes de carbone, et dans lequel lesdits groupes R¹, R² et R³ comprennent un total de 8 atomes de carbone.

3. Pneu pour roues de véhicule selon la revendication 1, dans lequel l'une des chaînes alkyle représentées par lesdits groupes R¹, R² et R³ comprend de 2 à 6 atomes de carbone, et les deux autres chaînes alkyle représentées par lesdits groupes R¹, R² et R³ comprennent de 1 à 3 atomes de carbone.

4. Pneu pour roues de véhicule selon la revendication 1, dans lequel R¹ représente une chaîne alkyle linéaire ou ramifiée comprenant 8 atomes de carbone et R² et R³ sont un atome d'hydrogène.

5. Pneu pour roues de véhicule selon la revendication 1, dans lequel ledit sel organique de zinc est choisi dans le groupe constitué par les sels de zinc de l'acide 2,2-diméthyl-octanoïque, de l'acide 2-méthyl-2-éthyl-heptanoïque, de l'acide 2-méthyl-2-isopropyl-hexanoïque, de l'acide 2,4-diméthyl-2-isopropyl-pentanoïque, de l'acide 2,2,3,5-tétraméthyl-hexanoïque, de l'acide 2,2-diéthyl-hexanoïque, de l'acide 4-méthyl-2,2-diéthyl-pentanoïque, de l'acide 2-éthyl-2-isopropyl-pentanoïque, de l'acide 2,2-isopropyl-butyrique, de l'acide 3,3,5,5-tétraméthyl-hexanoïque, de l'acide 7,7-diméthylhexanoïque et de leurs mélanges.

6. Pneu pour roues de véhicule selon l'une quelconque des revendications 1 à 5, dans lequel ladite composition élastomère comprend de 0,5 à 4 phr dudit sel organique de zinc.

7. Pneu pour roues de véhicule selon l'une quelconque des revendications 1 à 6, dans lequel ledit polymère styrène-butadiène (SBR), éventuellement fonctionnalisé par des agents de terminaison ou de couplage, comprend des unités monomères de styrène et de butadiène, avec un pourcentage pondéral de styrène compris entre 10 % et 55 %, et un pourcentage pondéral de vinyle (par rapport au butadiène) compris entre 10 % et 70 %.

8. Pneu pour roues de véhicule selon l'une quelconque des revendications 1 à 6, dans lequel ledit polymère d'isoprène (IR) est un élastomère naturel ou synthétique obtenu par addition 1,4-cis d'isoprène, éventuellement fonctionnalisé par des agents de terminaison ou de couplage.

9. Pneu pour roues de véhicule selon l'une quelconque des revendications 1 à 6, dans lequel ledit polymère de butadiène (BR) est un polymère résultant de la polymérisation du 1,3-butadiène, éventuellement en présence d'autres dioléfines conjuguées, dans lequel le 1,3-butadiène est présent en une quantité non inférieure à 50 % en poids par rapport au poids total du polymère.

10. Pneu pour roues de véhicule selon l'une quelconque des revendications 1 à 5, dans lequel ladite composition élastomère comprend de 1 à 3 phr dudit sel organique de zinc.

11. Pneu pour roues de véhicule selon l'une quelconque des revendications 1 à 6, dans lequel ledit polymère styrène-butadiène (SBR), éventuellement fonctionnalisé par des agents de terminaison ou de couplage, comprend des unités monomères de styrène et de butadiène, avec un pourcentage pondéral de styrène compris entre 20 % et 45 %, et un pourcentage pondéral de vinyle (par rapport au butadiène) compris entre 15 % et 65 %.

12. Pneu pour roues de véhicule selon l'une quelconque des revendications 1 à 6, dans lequel ledit polymère d'isoprène (IR) est du caoutchouc naturel (NR), éventuellement fonctionnalisé par des agents de terminaison ou de couplage.

13. Composé élastomère vulcanisable et expansible obtenu par mélange d'une composition élastomère, dans lequel ladite composition élastomère comprend :
(i) 100 phr d'une composition polymère élastomère comprenant :
a. au moins un polymère styrène-butadiène (SBR) en une quantité de 70 à 100 phr, et
b. éventuellement, de 0 à 30 phr d'au moins un polymère élastomère choisi dans le groupe constitué par le polymère d'isoprène (IR) et le polymère de butadiène (BR),
(ii) de 50 à 100 phr d'un mélange de résines et/ou d'huiles plastifiantes,
(iii) au moins une charge renforçante en une quantité de 50 à 130 phr,
(iv) au moins un agent de vulcanisation en une quantité de 0,1 à 12 phr, et
(v) de 0,1 à 5 phr d'un sel organique de zinc ayant la formule développée suivante 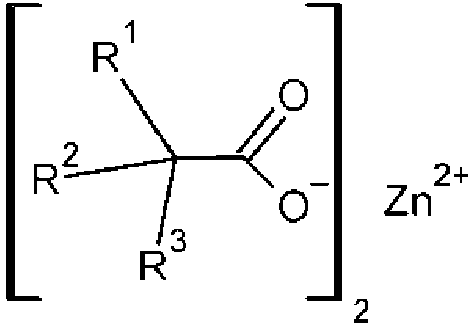 dans laquelle les groupes R¹, R² et R³, égaux ou différents entre eux, sont un atome d'hydrogène ou une chaîne alkyle linéaire ou ramifiée comprenant de 1 à 10 atomes de carbone, et dans laquelle les groupes R¹, R² et R³ comprennent un total de 8 à 10 atomes de carbone.

14. Composé élastomère vulcanisable selon la revendication 13, dans lequel ladite composition élastomère comprend de 0,5 à 4 phr dudit sel organique de zinc.

15. Composé élastomère vulcanisable selon la revendication 13, dans lequel ledit polymère styrène-butadiène (SBR), éventuellement fonctionnalisé par des agents de terminaison ou de couplage, comprend des unités monomères de styrène et de butadiène, avec un pourcentage pondéral de styrène dans la plage de 10 % à 55 %, et un pourcentage pondéral de vinyle (par rapport au butadiène) dans la plage de 10 % à 70 %.
